# EUROPÄISCHE PATENTANMELDUNG

(11) **EP 3 540 886 A1**
(43) Veröffentlichungstag der Anmeldung: **18.09.2019**
(21) Anmeldenummer: 19162914.6
(22) Anmeldetag: 14.03.2019
(51) Int. Cl.: H02G 3/14, H01H 9/18, H02G 3/16, H01R 13/717

(54) **ELEKTRONIKMODUL FÜR EIN ELEKTRISCHES INSTALLATIONSGERÄT**

(30) Priorität: 15.03.2018 DE 102018106105
(71) Anmelder: Berker GmbH & Co. KG, 58579 Schalksmühle (DE)
(72) Erfinder: CEUCA, Robert, 58579 SCHALKSMÜHLE (DE); DIEGMANN, Rolf-Dieter, 58579 SCHALKSMÜHLE (DE)
(74) Vertreter: Cabinet Nuss

(57) **Zusammenfassung**

Die Erfindung betrifft ein Elektronikmodul (10) für ein in einer Installationsdose (90) festlegbares elektrisches Installationsgerät (60), mit einer Elektronikeinheit (12), die mit wenigstens einer eine Leiterbahn umfassenden elektrischen Leiterplatte (26) versehen ist, und einem Designrahmen (40). Die Elektronikeinheit (12) ist fest mit dem Träger (64) des Installationsgeräts (60) verbindbar und zwischen dem Träger (64) und dem Designrahmen (40) anordenbar. Das Elektronikmodul (10) umfasst eine als isoliertes Kabel ausgebildete Stromversorgungsleitung (27), die elektrisch leitend mit der Leiterbahn der Leiterplatte (26) verbunden ist und die durch eine in einem Träger (64) des Installationsgeräts (60) angeordnete erste Befestigungsöffnung (66) führbar ist, um elektrisch leitend mit dem Installationsgerät (60) oder einer in der Installationsdose (90) zugänglichen Elektroinstallation verbunden zu werden.

## Beschreibung

Die Erfindung betrifft ein Elektronikmodul für ein in einer Installationsdose festlegbares elektrisches Installationsgerät und ein Verfahren zur Montage eines solchen Elektronikmoduls.

Elektrische Installationsgeräte sind in der Regel für den Einbau in eine Wand mittels einer Installationsdose vorgesehen. Eine solche Installationsdose kann beispielsweise eine Unterputzdose oder eine Hohlwanddose sein. Dafür umfassen die elektrischen Installationsgeräte in der Regel einen Träger, der ausgebildet ist, um mittels Schrauben mit der Installationsdose fest verbunden zu werden, um das Installationsgerät in der Installationsdose festzulegen. Alternativ oder zusätzlich kann das elektrische Installationsgerät mittels Krallen in der Installationsdose festgelegt werden.

Ferner sind Elektronikmodule in Form von beleuchteten Rahmen für Installationsgerät bekannt, die an dem Installationsgerät befestigbar sind, um das Installationsgerät oder eine Umgebung des elektrischen Installationsgeräts beleuchten zu können. So ist beispielsweise aus EP 2 537 217 B1 ein Abdeckrahmen für Installationsgeräte aus transluszentem Material bekannt. Der Abdeckrahmen verfügt über Kontakte für die Stromversorgung, die mit Federkontakten, die an einem Träger des Installationsgerät angeordnet sind, in Berührung kommen, um den Abdeckrahmen mit Strom zu versorgen. Dieser Abdeckrahmen benötigt jedoch einen speziell auf diesen abgestimmten Träger auf Seiten des Installationsgeräts und bietet eine fehleranfällige Art der Kontaktierung zur Stromversorgung des Abdeckrahmens.

Es ist die Aufgabe der vorliegenden Erfindung, ein Elektronikmodul für ein elektrisches Installationsgerät vorzuschlagen, der variabel für viele Installationsgeräte einsetzbar ist und zuverlässig dauerhaft mit Strom versorgt werden kann.

Erfindungsgemäß wird diese Aufgabe durch ein Elektronikmodul nach Anspruch 1 und ein Verfahren zur Montage eines Elektronikmoduls nach Anspruch 9 gelöst.

Das erfindungsgemäße Elektronikmodul weist eine eine Leiterplatte aufweisende Elektronikeinheit und einen Designrahmen auf. Die Leiterplatte ist mit wenigstens einer elektrischen Leiterbahn versehen. Die Elektronikeinheit ist fest mit einem Träger des Installationsgerätes verbindbar und zwischen dem Träger und dem Designrahmen anordenbar.

Die Elektronikeinheit umfasst eine als isoliertes Kabel ausgebildete Stromversorgungsleitung, die elektrisch leitend mit der Leiterplatte verbunden ist und durch eine in dem Träger des Installationsgeräts angeordnete erste Befestigungsöffnung führbar ist, um elektrisch leitend mit dem Installationsgerät oder einer in der Installationsdose zugänglichen Elektroinstallation verbunden zu werden.

Das erfindungsgemäße Elektronikmodul ist variabel für verschiedene mit einem standardmäßigen Träger versehene Installationsgeräte einsetzbar. Das Installationsgerät kann beispielsweise eine Steckdose, ein Lichtschalter oder ein Dimmer, oder eine wandgebundene Steuerungseinheit, Eingabeeinheit oder Anzeigevorrichtung sein, und wird üblicherweise mit 230 V betrieben. Die am Träger angeordnete erste Befestigungsöffnung kann ein sogenanntes Schlüsselloch mit einem kreisbogenförmigen Abschnitt und einem kreisrunden Abschnitt sein. Die Stromversorgungsleitung kann durch den kreisrunden Abschnitt des Schlüssellochs geführt sein. Der kreisrunde Abschnitt des Schlüssellochs kann ferner zur Durchführung eines Kopfes einer Befestigungsschraube dienen.

Vorzugsweise kann der kreisrunde Abschnitt des Schlüssellochs bezüglich des kreisbogenförmigen Abschnitts des Schlüssellochs zum Inneren des Installationsgerätes hin versetzt sein. Das heißt, dass ein Mittelpunkt des kreisförmigen Abschnitts des Schlüssellochs näher zur Mitte des Installationsgerätes angeordnet ist als eine Mittellinie des kreisbogenförmigen Abschnitts des Schlüssellochs. So kann beispielsweise die Mittellinie des kreisbogenförmigen Abschnitts des Schlüssellochs in einem Abstand von 30 mm zur Mitte des Installationsgerätes verlaufen und der Mittelpunkt des kreisförmigen Abschnitts in einem Abstand von unter 30 mm zur Mitte des Installationsgerätes angeordnet sein.

In einer Bevorzugten Ausgestaltung umfasst die Elektronikeinheit wenigstens ein auf der elektrischen Leiterplatte angeordnetes und elektrisch mit der Leiterbahn verbundenes Leuchtmittel. Demgemäß ist die Elektronikeinheit als Beleuchtungseinheit ausgebildet.

Alternativ dazu kann das Elektronikmodul als Kommunikationsmodul, insbesondere als Bluetooth-Modul oder als WLAN-Modul, als Lademodul zum Laden eines Elektronikkleinstgerätes, wie beispielsweise ein Mobiltelefon oder Tablet, oder als Energiespeicher (Powerbank) ausgebildet sein.

Vorzugsweise umfasst die Elektronikeinheit ferner ein unteres Gehäuseteil und ein mit dem unteren Gehäuseteil verbundenes oberes Gehäuseteil, wobei die elektrische Leiterplatte zwischen dem unteren Gehäuseteil und dem oberen Gehäuseteil angeordnet ist.

Dabei kann vorzugsweise das untere Gehäuseteil mit dem oberen Gehäuseteil formschlüssig verbunden sein.

In einer bevorzugten Ausgestaltung ist das untere Gehäuseteil als Diffusionselement ausgebildet, das geeignet ist, das durch das Leuchtmittel emittierte Licht zu diffundieren.

Alternativ oder zusätzlich kann das obere Gehäuseteil als Diffusionselement ausgebildet sein, das geeignet ist, dass durch das Leuchtmittel emittierte Licht zu diffundieren.

Das Leuchtmittel, die elektrische Leiterplatte, das obere Gehäuseteil und/oder das untere Gehäuseteil können ausgebildet sein, um das durch das Leuchtmittel emittierte Licht zu allen vier Seiten des Elektronikmoduls randseitig nach außen zu diffundieren. Alternativ können das Leuchtmittel, die elektrische Leiterplatte, des obere Gehäuseteil und/oder das untere Gehäuseteil ausgebildet sein, um das durch das Leuchtmittel emittierte Licht zu einer der vier Seiten des Elektronikmoduls randseitig nach außen zu diffundieren.

Vorzugsweise umfasst das untere Gehäuseteil und/oder das obere Gehäuseteil eine Kabeldurchführungsöffnung, durch welche die Stromversorgungsleitung geführt ist und die angrenzend an die erste Befestigungsöffnung des Installationsgeräts anordenbar ist.

Durch diese Ausgestaltung kann die Stromversorgungsleitung in einfacher Weise durch die erste Befestigungsöffnung gesteckt werden. Ferner ermöglicht die Kabeldurchführungsöffnung eine Zugentlastung der Stromversorgungsleitung auf Seiten einer Lötverbindung mit der elektrischen Leiterbahn.

In einer bevorzugten Ausgestaltung umfasst das untere Gehäuseteil ferner wenigstens eine Gehäusebefestigungsöffnung, die angrenzend an die erste Befestigungsöffnung, an eine weitere Befestigungsöffnung des Trägers und/oder an eine Befestigungsöffnung der Installationsdose anordenbar ist und die zur Befestigung des unteren Gehäuseteils und/oder des Elektronikmoduls auf dem Installationsgerät und/oder der Installationsdose mittels einer Schraube dient.

Durch diese Ausgestaltung kann das Elektronikmodul in einfacher Weise mit dem Installationsgerät verbunden werden.

Vorzugsweise deckt der Designrahmen die erste Befestigungsöffnung und/oder die weitere Befestigungsöffnung und/oder die Kabeldurchführungsöffnung und/oder die Stromversorgungsleitung und/oder die Gehäusebefestigungsöffnung und/oder die Befestigungsöffnung der Installationsdose und/oder die Schraube ab.

Durch diese Ausgestaltung kann das optische Erscheinungsbild des Elektronikmoduls verbessert werden.

Vorzugsweise ist der Designrahmen von dem Installationsgerät lösbar, ohne dass dabei die Befestigung des Installationsgeräts in der Installationsdose und/oder die Befestigung der Elektronikeinheit an dem Träger beeinträchtigt wird.

In einer bevorzugten Ausgestaltung umfasst die Elektronikeinheit ferner einen Umgebungslichtsensor, der an der Leiterplatte angeordnet ist, um in Abhängigkeit der in der Umgebung des Elektronikmoduls vorherrschenden Lichtverhältnisse das Leuchtmittel zu steuern.

Vorzugsweise umfasst die Elektronikeinheit wenigstens ein Haftmittel, das zum stoffschlüssigen Verbinden des unteren Gehäuseteils und/oder des oberen Gehäuseteils mit dem Träger des elektrischen Installationsgeräts dient.

Durch diese Ausgestaltung kann das Elektronikmodul in einfacher Weise vor dem Durchführen der Schrauben durch die Befestigungsöffnungen an dem Träger vorfixiert werden.

Das erfindungsgemäße Verfahren zur Montage eines erfindungsgemäßen Elektronikmoduls umfasst folgende Verfahrensschritte:
Bereitstellen einer Installationsdose; und
Bereitstellen eines in die Installationsdose festlegbaren elektrischen Installationsgeräts mit einem eine erste Befestigungsöffnung aufweisenden Träger,
Durchführen der Stromversorgungsleitung durch die erste Befestigungsöffnung;
elektrisch leitendes Verbinden der Stromversorgungsleitung mit dem elektrischen Installationsgerät oder mit einer in der Installationsdose zugänglichen Elektroinstallation;
Befestigen der Elektronikeinheit an dem Träger; und
Anordnen des Designrahmens derart, dass die Elektronikeinheit zwischen dem Träger und dem Designrahmen angeordnet ist.

Diese Ausgestaltung ermöglicht eine einfache Montage des Elektronikmoduls an einer Vielzahl von verschiedenen Installationsgeräten.

In einer bevorzugten Ausgestaltung wird vor dem Durchführen der Stromversorgungsleitung durch die erste Befestigungsöffnung die Stromversorgungsleitung durch die Kabeldurchführungsöffnung geführt.

Diese Ausgestaltung ermöglicht eine Zugentlastung der Stromversorgungsleitung und erleichtert so die Verbindung der Stromversorgungsleitung mit dem elektrischen Installationsgerät oder mit der Elektroinstallation.

Vorzugsweise wird nach dem elektrisch leitenden Verbinden der Stromversorgungsleitung mit dem elektrischen Installationsgerät oder mit der Elektroinstallation die Gehäusebefestigungsöffnung angrenzend an die erste Befestigungsöffnung, an eine weitere Befestigungsöffnung des Trägers und/oder an eine Befestigungsöffnung der Installationsdose angeordnet und zur Befestigung des unteren Gehäuseteils und/oder des Elektronikmoduls auf dem Installationsgerät und/oder an der Installationsdose wird eine Schraube durch die Gehäusebefestigungsöffnung und die erste Befestigungsöffnung, die weitere Befestigungsöffnung und/oder der Befestigungsöffnung der Installationsdose geführt.

Diese Ausgestaltung ermöglicht eine einfache Montage des Elektronikmoduls an einer Vielzahl verschiedener Installationsgeräte.

In einer bevorzugten Ausgestaltung wird nach dem Durchführen der Schraube durch die Gehäusebefestigungsöffnung der Designrahmen auf dem unteren Gehäuseteil und/oder den oberen Gehäuseteil aufgesetzt, um die erste Befestigungsöffnung und/oder die weitere Befestigungsöffnung und/oder die Kabeldurchführungsöffnung und/oder die Stromversorgungsleitung und/oder die Gehäusebefestigungsöffnung und/oder die Befestigungsöffnung der Installationsdose und/oder die Schraube abzudecken.

Vorzugsweise wird vor dem Durchführen der Schraube durch die Gehäusebefestigungsöffnung das Elektronikmodul mittels des wenigstens einen Haftmittels an dem Träger befestigt und/oder auf dem Träger vorfixiert.

Einzelheiten und weitere Vorteile des erfindungsgemäßen Elektronikmoduls und des erfindungsgemäßen Verfahrens zur Montage des Elektronikmoduls werden anhand des nachfolgend beschriebenen Ausführungsbeispiels erläutert. Dabei veranschaulichen im Einzelnen:
Fig. 1: eine Explosionsdarstellung eines anmeldungsgemäßen Elektronikmoduls nach dem Ausführungsbeispiel und eines elektrischen Installationsgerätes;
Fig. 2: eine Explosionsdarstellung des Elektronikmoduls nach dem Ausführungsbeispiel;
Fig. 3: eine Explosion Darstellung eines Designrahmens des Elektronikmoduls nach dem Ausführungsbeispiel;
Fig. 4: eine weitere Explosionsdarstellung des Elektronikmoduls nach dem Ausführungsbeispiel und des elektrischen Installationsgerätes;
Fig. 5: eine weitere Explosionsdarstellung des Elektronikmoduls nach dem Ausführungsbeispiel und des elektrischen Installationsgerätes aus einer seitlichen Perspektive;
Fig. 6: eine perspektivische Ansicht des Elektronikmoduls nach dem Ausführungsbeispiel und des elektrischen Installationsgerätes;
Fig. 7: eine Draufsicht des Elektronikmoduls nach dem Ausführungsbeispiel und des elektrischen Installationsgerätes;
Fig. 8: eine perspektivische Ansicht des Elektronikmoduls nach dem Ausführungsbeispiel;
Fig. 9: eine Detailansicht des Elektronikmoduls nach dem Ausführungsbeispiel;
Fig. 10: eine Detailansicht des Elektronikmoduls nach dem Ausführungsbeispiel; und
Fig. 11: eine Draufsicht des Elektronikmoduls nach dem Ausführungsbeispiel und des elektrischen Installationsgerätes.

Die Anmeldung betrifft ein Elektronikmodul 10 für ein in einer Installationsdose 90 festgelegtes elektrisches Installationsgerät 60. Nach dem Ausführungsbeispiel ist das elektrische Installationsgerät 60 eine Steckdose. Das Elektronikmodul 10 weist eine Elektronikeinheit 12 mit wenigstens einer Leiterplatte 26, auf welcher wenigstens eine Leiterbahn angeordnet ist, und einen Designrahmen 40 auf. Die Elektronikeinheit 12 kann ferner wenigstens ein auf der elektrischen Leiterplatte 26 angeordnetes und elektrisch leitend mit der Leiterbahn verbundenes Leuchtmittel 28 umfassen. Das Elektronikmodul 10 kann somit als beleuchteter Rahmen ausgebildet sein. Alternativ dazu kann das Elektronikmodul 10 als Kommunikationsmodul, insbesondere als Bluetooth-Modul oder als WLAN-Modul, als Lademodul zum Laden eines Elektronikkleinstgerätes, wie beispielsweise ein Mobiltelefon oder Tablet, oder als Energiespeicher (Powerbank) ausgebildet sein.

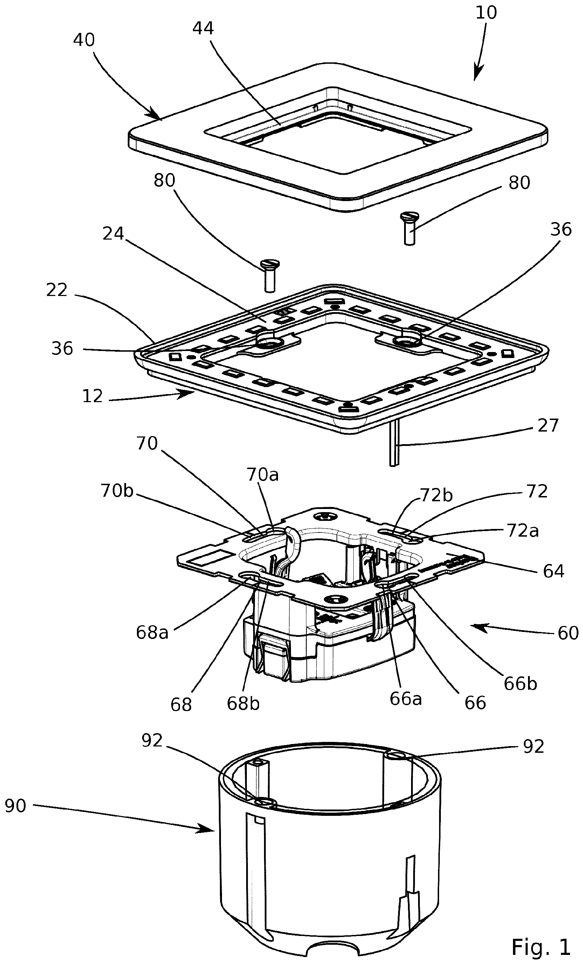

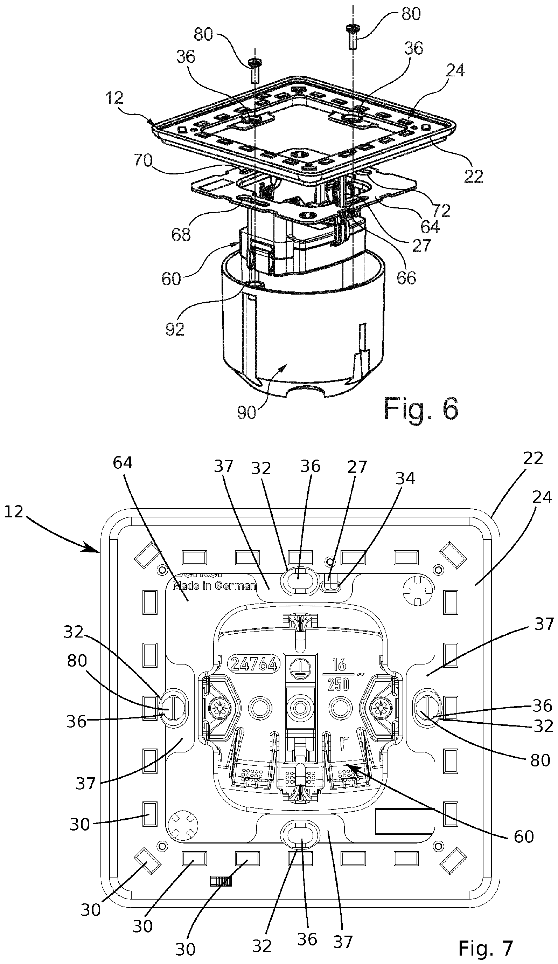

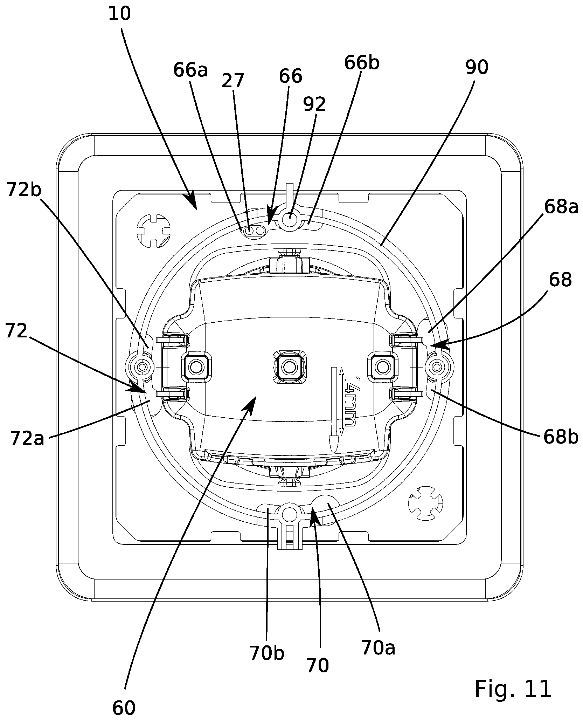

Das elektrische Installationsgerät 60 kann in einer Hohlwanddose oder in einer Unterputzdose festgelegt sein. Das heißt, die Installationsdose 90 kann entweder eine Hohlwanddose oder eine Unterputzdose sein. So veranschaulichen insbesondere die Figuren 1 und 6 den Einbau des Installationsgeräts 60 in einer Hohlwanddose und die Figur 11 den Einbau des Installationsgeräts 60 in einer Unterputzdose.

Das elektrische Installationsgerät 60 umfasst in der Regel einen Träger 64, der ausgebildet ist, um mittels Schrauben mit der Installationsdose 90 fest verbunden zu werden, um das Installationsgerät 60 in der Installationsdose 90 festzulegen.

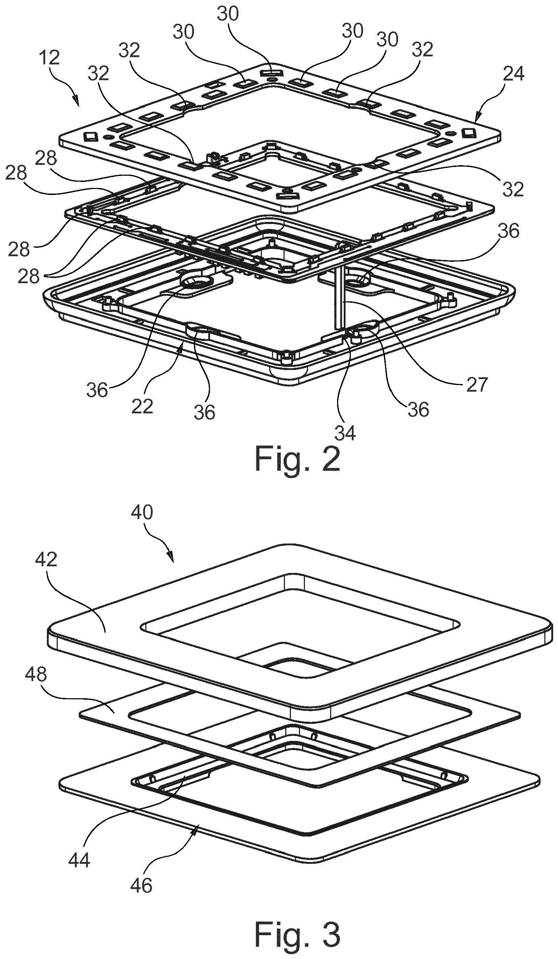

Das Leuchtmittel 28 kann beispielsweise eine lichtemittierende Diode sein. Die Figuren 2, 4 und 5 zeigen beispielhaft die Anordnung der Leuchtmittel 28 auf der Leiterplatte 26. Zur Beibehaltung der Übersicht in diesen Figuren wurden nur einige der Leuchtmittel 28 mit einem entsprechenden Bezugszeichen versehen.

Die Elektronikeinheit 12 umfasst eine als isoliertes Kabel ausgebildete Stromversorgungsleitung 27. Die Stromversorgungsleitung 27 ist elektrisch leitend mit der Leiterbahn verbunden und kann durch eine in dem Träger 64 des Installationsgeräts 60 angeordnete erste Befestigungsöffnung 66 geführt werden, um elektrisch leitend mit dem Installationsgerät 60 oder einer in der Installationsdose zugänglichen Elektroinstallation verbunden zu werden. Dabei kann Elektroinstallation beispielsweise durch die Installationsdose verlaufen.

Das Elektronikmodul 10 und das elektrische Installationsgerät 60 bilden eine in der Installationsdose 90 festlegbare elektrische Installationsvorrichtung.

Neben der ersten Befestigungsöffnung 66 kann der Träger 64 des elektrischen Installationsgeräts 60 weitere Befestigungsöffnungen 68, 70, 72 umfassen die im Abstand von 90° zueinander an dem Träger 64 angeordnet sein können. Die Befestigungsöffnungen 66, 68, 70, 72 können sogenannte Schlüssellöcher sein. Dies ist insbesondere in Figur 1 wiedergegeben.

Die als Schlüssellöcher ausgebildeten Befestigungsöffnungen 66, 68, 70, 72 können jeweils mit einem kreisrunden Abschnitt 66a, 68a, 70a, 72a und einem kreisbogenförmigen Abschnitt 66b, 68b, 70b, 72b versehen sein.

Die Stromversorgungsleitung 27 kann durch den kreisrunden Abschnitt 66a, 68a, 70a, 72a des Schlüssellochs geführt sein. Der kreisrunde Abschnitt 66a, 68a, 70a, 72a des Schlüssellochs kann ferner zur Durchführung eines Kopfes einer Schraube 80 dienen.

Vorzugsweise kann der kreisrunde Abschnitt 66a, 68a, 70a, 72a des Schlüssellochs bezüglich des kreisbogenförmigen Abschnitts 66b, 68b, 70b, 72b des Schlüssellochs zum Inneren des Installationsgerätes 60 hin versetzt sein. Das heißt, dass ein Mittelpunkt des kreisförmigen Abschnitts 66a, 68a, 70a, 72a des Schlüssellochs näher zur Mitte des Installationsgerätes angeordnet ist als eine Mittellinie des kreisbogenförmigen Abschnitts 66b, 68b, 70b, 72b des Schlüssellochs. So kann beispielsweise die Mittellinie des kreisbogenförmigen Abschnitts 66b, 68b, 70b, 72b des Schlüssellochs in einem Abstand von 30 mm zur Mitte des Installationsgerätes 60 verlaufen und der Mittelpunkt des kreisförmigen Abschnitts 66a, 68a, 70a, 72a in einem Abstand von weniger als 30 mm zur Mitte des Installationsgerätes 60 angeordnet sein.

Das elektrische Installationsgerät 60 kann ferner ein Zentralstück 62 umfassen, das mit einem Befestigungsmittel an dem Körper des Installationsgeräts 60 befestigt ist. Das Befestigungsmittel kann beispielsweise eine Schraube oder eine Rastverbindung sein.

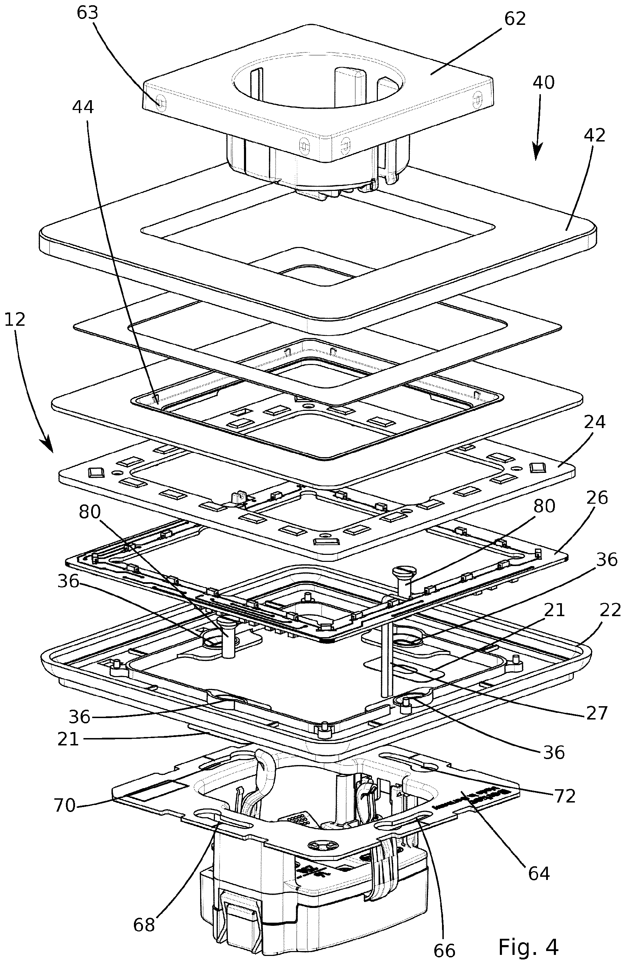

Die Elektronikeinheit 12 kann ein unteres Gehäuseteil 22 und ein oberes Gehäuseteil 24 umfassen. Die Leiterplatte 26 ist zwischen dem unteren Gehäuseteil 22 und dem oberen Gehäuseteil 24 angeordnet. Das obere Gehäuseteil 24 kann mit dem unteren Gehäuseteil 22 formschlüssig verbunden sein. Das untere Gehäuseteil 22, das obere Gehäuseteil 24 und/oder der Designrahmen 40 können eine Funktionsöffnung umfassen, durch welchen hindurch das Zentralstück 62 zumindest abschnittsweise geführt werden kann. Der Designrahmen 40, der insbesondere in Figur 3 wiedergegebenen ist, kann einen inneren Randabschnitt 44 umfassen, an welchen ein Außenabschnitt 63 des Zentralstücks 62 angelegt werden kann, um den Designrahmen 40 formschlüssig an dem Installationsgerät 60 zu halten. Der Designrahmen 40 kann einen Dekorträger 46 und eine an dem Dekorträger 46 angeordnete Dekorschicht 42 umfassen. Dabei kann die Dekorschicht 42 mittels einer Klebeschicht 48 an dem Dekorträger 46 befestigt sein. Der Randabschnitt 44 ist vorzugsweise an dem Dekorträger 46 gebildet. Diese Ausgestaltung ist insbesondere in Figur 4 wiedergegeben. Das untere Gehäuseteil 22 kann Schalenförmig ausgebildet sein, um die elektrische Leiterplatte 26 aufzunehmen. Der Designrahmen 40 kann von dem Installationsgerät 60 gelöst werden, ohne die Befestigung des Installationsgeräts 60 in der Installationsdose 90 und ohne die Befestigung der Elektronikeinheit 12 an dem Träger 64 zu beeinträchtigen. Diese Ausgestaltung bietet den Vorteil, dass der Designerrahmen 40 in einfacher Weise ausgetauscht werden kann, ohne dabei die Elektronikeinheit 12 entfernen zu müssen und/oder ohne das Installationsgerät 60 von der Installationsdose 90 lösen zu müssen.

Das untere Gehäuseteil 22 kann wenigstens eine Gehäusebefestigungsöffnung 36 umfassen, die angrenzend an die erste Befestigungsöffnung 66 oder eine der weiteren Befestigungsöffnungen 68, 70,72 anordenbar ist. Dadurch kann eine Schraube 80 durch die Gehäusebefestigungsöffnung 36 und die Befestigungsöffnung 66, 68, 70, 72 bis hin zu einer Befestigungsöffnung 92 der Installationsdose 90, in welcher die Schraube 80 mittels eines Gewindes gehalten ist, geführt werden. Dadurch können die Elektronikeinheit 12 und das elektrische Installationsgerät 60 mittels derselben Schraube 80 in der Installationsdose 90 festgelegt werden. Nach dem Ausführungsbeispiel umfasst das Elektronikmodul 10 insgesamt vier Gehäusebefestigungsöffnungen 36.

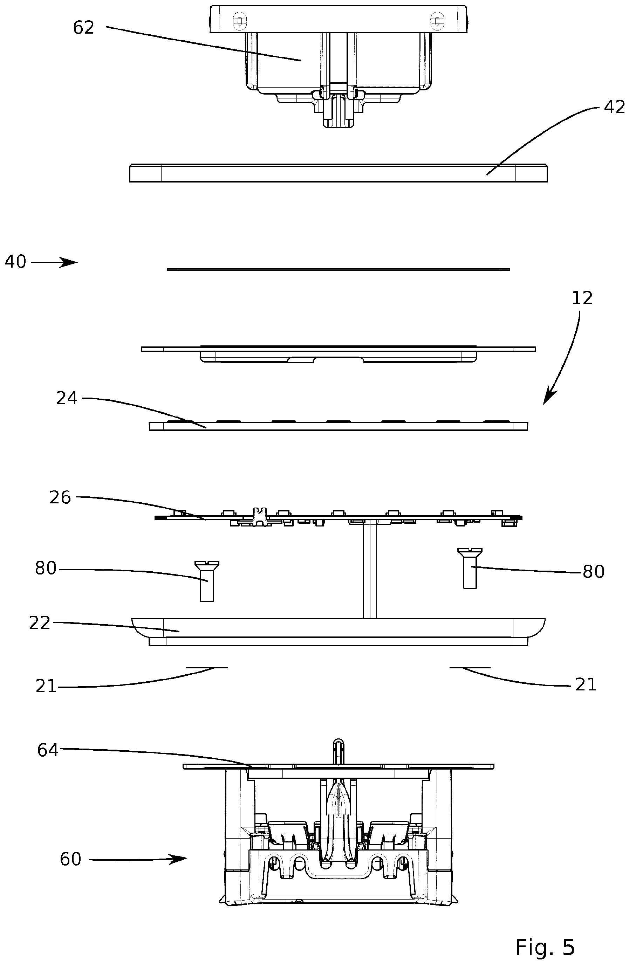

Die Gehäusebefestigungsöffnung 36 kann an einem Flanschabschnitt 37 des unteren Gehäuseteils 22 angeordnet sein. Der Flanschabschnitt 37 kann sich dabei im Wesentlichen parallel zum Träger 64 des elektrischen Installationsgeräts 60 erstrecken. An dem Flanschabschnitt 37 können ferner Haftmittel 21 angeordnet sein, die zum stoffschlüssigen Verbinden des Flanschabschnitts 37 mit dem Träger 64 des elektrischen Installationsgeräts 60 dienen. Die Haftmittel 21 können als wiederlösbare Klebepads ausgebildet sein und bis zu vier bis fünfmal an dem Träger 64 befestigt und von dem Träger 64 gelöst werden. Die Haftmittel 21 sind in den Figuren 4 und 5 wiedergegeben.

Das untere Gehäuseteil 22 kann als Diffusionselement ausgebildet sein, das geeignet ist, dass durch das Leuchtmittel 28 emittierte Licht zu diffundieren. So kann mittels des unteren Gehäuseteils 22 das Licht zu allen vier Seiten des Elektronikmoduls 10 randseitig nach außen diffundiert werden. Alternativ kann mittels des unteren Gehäuseteils 22 das Licht lediglich zu einer der vier Seiten des Elektronikmoduls 10 randseitig nach außen diffundiert werden.

Das obere Gehäuseteil 24 kann weitere Diffusionselemente 30 oberhalb der Leuchtmittel 28 umfassen. Ferner kann das obere Gehäuseteil 24 benachbart zu der Gehäusebefestigungsöffnung 36 eine Aussparung 32 umfassen, um ein vorbeiführen der Schraube 80 an dem oberen Gehäuseteil 24 zu ermöglichen.

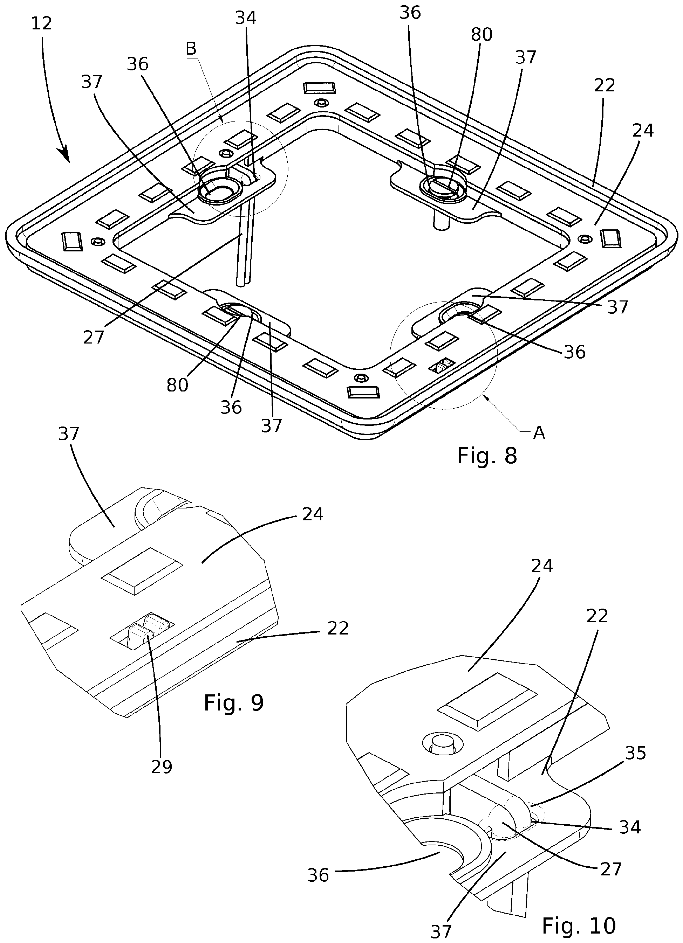

Das untere Gehäuseteil 22 und/oder das obere Gehäuseteil 24 kann eine Kabeldurchführungsöffnung 34 umfassen. Durch die Kabeldurchführungsöffnung 34 kann die Stromversorgungsleitung 27 geführt sein. Die Kabeldurchführungsöffnung 34 ist angrenzend an die erste Befestigungsöffnung 66 des Installationsgeräts 60 anordenbar. Somit kann die Stromversorgungsleitung 27 in einfacher Weise durch die erste Befestigungsöffnung 66 geführt werden. Die Kabeldurchführungsöffnung 34 dient zur Zugentlastung der Lötverbindung zwischen der Leiterbahn und der Stromversorgungsleitung 27. Um noch eine verbesserte Zugentlastung zu erzielen, kann die Kabeldurchführungsöffnung 34 ferner mit einem Rundungsabschnitt 35 versehen sein. Der Rundungsabschnitt 35 ist insbesondere in Figur 10 wiedergegeben. Die Kabeldurchführungsöffnung 34 kann ebenfalls an dem Flanschabschnitt 37 angeordnet sein.

Die Elektronikeinheit 12 kann einen Schiebeschalter 29 umfassen, der nach Abnahme des Designrahmens 40 durch einen Installateur betätigt werden kann, um beispielsweise die Helligkeit der Beleuchtung einstellen zu können.

Durch den Designrahmen 40 können die erste Befestigungsöffnung 66 und/oder die weiteren Befestigungsöffnungen 68, 70,72 und/oder die Kabeldurchführungsöffnung 34 und/oder die Stromversorgungsleitung 27 und/oder die Gehäusebefestigungsöffnung 36 und/oder die Befestigungsöffnung 92 der Installationsdose 90 und/oder die Schraube 80 und/oder der Schiebeschalter 29 abgedeckt werden.

Die Elektronikeinheit 12 kann einen Umgebungslichtsensor umfassen (in den Figuren nicht wiedergegeben), der an der Leiterplatte 26 angeordnet ist, um in Abhängigkeit der in der Umgebung des Elektronikmoduls 10 vorherrschenden Lichtverhältnisse das Leuchtmittel 28 zu steuern. So kann beispielsweise die Elektronikeinheit 12 dann aktiviert werden, wenn das Umgebungslicht schwach ist, sodass ein Auffinden des Installationsgeräts 60 das für einen Benutzer erleichtert wird.

Das anmeldungsgemäße Elektronikmodul 10 wird durch ein Verfahren zur Montage gemäß der Anmeldung montiert. Das Verfahren umfasst folgende Verfahrensschritte:
Bereitstellen einer Installationsdose 90; und
Bereitstellen eines in die Installationsdose 90 festlegbaren elektrischen Installationsgeräts 60 mit einem eine erste Befestigungsöffnung 66 aufweisenden Träger 64,
gekennzeichnet durch folgende Verfahrensschritte:
   Durchführen der Stromversorgungsleitung 27 durch die erste Befestigungsöffnung 66;
   elektrisch leitendes Verbinden der Stromversorgungsleitung 27 mit dem elektrischen Installationsgerät 60 oder mit einer in der Installationsdose 90 zugänglichen Elektroinstallation;
   Befestigen der Elektronikeinheit 12 an dem Träger 64; und
   Anordnen des Designrahmens 40 derart, dass die Elektronikeinheit 12 zwischen dem Träger 64 und dem Designrahmen 40 angeordnet ist.

Vor dem Durchführen der Stromversorgungsleitung 27 durch die erste Befestigungsöffnung 66 kann die Stromversorgungsleitung 27 durch die Kabeldurchführungsöffnung 34 geführt werden.

Nach dem elektrisch leitenden Verbinden der Stromversorgungsleitung 27 mit dem elektrischen Installationsgerät 60 oder mit der Elektroinstallation kann die Gehäusebefestigungsöffnung 36 angrenzend an die erste Befestigungsöffnung 66, an eine weitere Befestigungsöffnung 68, 70, 72 des Trägers 60 und/oder an eine Befestigungsöffnung 92 der Installationsdose 90 angeordnet werden und zur Befestigung des unteren Gehäuseteils 22 und/oder des Elektronikmoduls 10 auf dem Installationsgerät 60 und/oder an der Installationsdose 90 kann eine Schraube 80 durch die Gehäusebefestigungsöffnung 36 und die erste Befestigungsöffnung 66, die weitere Befestigungsöffnung 68, 70, 72 und/oder der Befestigungsöffnung 92 der Installationsdose 90 geführt werden.

Nach dem Durchführen der Schraube 80 durch die Gehäusebefestigungsöffnung 36 kann der Designrahmen 40 auf dem unteren Gehäuseteil 22 und/oder den oberen Gehäuseteil 24 aufgesetzt werden, um die erste Befestigungsöffnung 66 und/oder die weitere Befestigungsöffnung 68, 70, 72 und/oder die Kabeldurchführungsöffnung 34 und/oder die Stromversorgungsleitung 27 und/oder die Gehäusebefestigungsöffnung 36 und/oder die Befestigungsöffnung 92 der Installationsdose 90 und/oder die Schraube 80 abzudecken.

Nach dem Aufsetzen des Designrahmens 40 kann ein Zentralstück 62 mit den übrigen Bestandteilen des elektrischen Installationsgerät 60 verbunden werden, um den Designrahmens 40 an dem elektrischen Installationsgerät 60 über seinen Randabschnitt 44 formschlüssig zu halten.

Selbstverständlich ist die Erfindung nicht auf die beschriebenen und dargestellten Ausführungsformen begrenzt. Änderungen, z. B. in den Ausführungsformen der verschiedenen Bestandteile oder Ersetzungen durch technische Äquivalente sind, soweit sie im Rahmen des beanspruchten Schutzbegehrens bleiben, jederzeit möglich.

## Patentansprüche

1. Elektronikmodul für ein in einer Installationsdose (90) festlegbares elektrisches Installationsgerät (60), mit einer Elektronikeinheit (12), die mit wenigstens einer eine Leiterbahn umfassenden elektrischen Leiterplatte (26) versehen ist, und einem Designrahmen (40), wobei die Elektronikeinheit (12) fest mit einem Träger (64) des Installationsgeräts (60) verbindbar ist und zwischen dem Träger (64) und dem Designrahmen (40) anordenbar ist, **dadurch gekennzeichnet, dass** die Elektronikeinheit (12) eine als isoliertes Kabel ausgebildete Stromversorgungsleitung (27) umfasst, die elektrisch leitend mit der Leiterbahn der Leiterplatte (26) verbunden ist und durch eine in dem Träger (64) angeordnete erste Befestigungsöffnung (66) führbar ist, um elektrisch leitend mit dem Installationsgerät (60) oder einer in der Installationsdose (90) zugänglichen Elektroinstallation verbunden zu werden.

2. Elektronikmodul nach Anspruch 1, **dadurch gekennzeichnet, dass** die Elektronikeinheit (12) ein unteres Gehäuseteil (22) und ein mit dem unteren Gehäuseteil (22) verbundenes oberes Gehäuseteil (24) umfasst, wobei die elektrische Leiterplatte (26) zwischen dem unteren Gehäuseteil (22) und dem oberen Gehäuseteil (24) angeordnet ist.

3. Elektronikmodul nach einem der Ansprüche 1 oder 2, **dadurch gekennzeichnet, dass** die Elektronikeinheit (12) wenigstens ein auf der elektrischen Leiterplatte angeordnetes und elektrisch mit der Leiterbahn verbundenes Leuchtmittel (28) umfasst.

4. Elektronikmodul nach einer Kombination der Ansprüche 2 und 3, **dadurch gekennzeichnet, dass** das untere Gehäuseteil (22) als Diffusionselement ausgebildet ist, das geeignet ist, das durch das Leuchtmittel (28) emittierte Licht zu diffundieren.

5. Elektronikmodul nach einem der Ansprüche 2 bis 4, **dadurch gekennzeichnet, dass** das untere Gehäuseteil (22) und/oder das obere Gehäuseteil (24) eine Kabeldurchführungsöffnung (34) umfasst, durch welche die Stromversorgungsleitung (27) geführt ist und die angrenzend an die erste Befestigungsöffnung (66) des Installationsgeräts (60) anordenbar ist.

6. Elektronikmodul nach einem der Ansprüche 2 bis 5, **dadurch gekennzeichnet, dass** das untere Gehäuseteil (22) ferner wenigstens eine Gehäusebefestigungsöffnung (36) umfasst, die angrenzend an die erste Befestigungsöffnung (66), an eine weitere Befestigungsöffnung (68, 70, 72) des Trägers (60) und/oder an eine Befestigungsöffnung (92) der Installationsdose (90) anordenbar ist und die zur Befestigung des unteren Gehäuseteils (22) und/oder des Elektronikmoduls (10) auf dem Installationsgerät (60) und/oder der Installationsdose (90) mittels einer Schraube (80) dient.

7. Elektronikmodul nach einem der Ansprüche 1 bis 6, **dadurch gekennzeichnet, dass** der Designrahmen (40) die erste Befestigungsöffnung (66) und/oder die weitere Befestigungsöffnung (68, 70, 72) und/oder die Kabeldurchführungsöffnung (34) und/oder die Stromversorgungsleitung (27) und/oder die Gehäusebefestigungsöffnung (36) und/oder die Befestigungsöffnung (92) der Installationsdose (90) und/oder die Schraube (80) abdeckt.

8. Elektronikmodul nach einem der Ansprüche 3 bis 7, **dadurch gekennzeichnet, dass** die Elektronikeinheit (12) einen Umgebungslichtsensor umfasst, der an der Leiterplatte (26) angeordnet ist, um in Abhängigkeit der in der Umgebung des Elektronikmoduls (10) vorherrschenden Lichtverhältnisse das Leuchtmittel (28) zu steuern.

9. Elektronikmodul nach einem der Ansprüche 2 bis 8, **dadurch gekennzeichnet**, das die Elektronikeinheit (12) wenigstens ein Haftmittel (21), das zum stoffschlüssigen Verbinden des unteren Gehäuseteils (22) und/oder des oberen Gehäuseteils (24) mit dem Träger (64) des elektrischen Installationsgeräts (60) dient, umfasst.

10. Verfahren zur Montage eines Elektronikmoduls (10) nach einem der Ansprüche 1 bis 9, umfassend folgende Verfahrensschritte:
Bereitstellen einer Installationsdose (90); und
Bereitstellen eines in die Installationsdose (90) festlegbaren elektrischen Installationsgeräts (60) mit einem eine erste Befestigungsöffnung (66) aufweisenden Träger (64),
**gekennzeichnet durch** folgende Verfahrensschritte:
Durchführen der Stromversorgungsleitung (27) durch die erste Befestigungsöffnung (66);
elektrisch leitendes Verbinden der Stromversorgungsleitung (27) mit dem elektrischen Installationsgerät (60) oder mit einer in der Installationsdose (90) zugänglichen Elektroinstallation;
Befestigen der Elektronikeinheit (12) an dem Träger (64); und
Anordnen des Designrahmens (40) derart, dass die Elektronikeinheit (12) zwischen dem Träger (64) und dem Designrahmen (40) angeordnet ist.

11. Verfahren nach Anspruch 10, wobei das Elektronikmodul (10) ein Elektronikmodul (10) nach einem der Ansprüche 5 bis 9 ist, **dadurch gekennzeichnet, dass** vor dem Durchführen der Stromversorgungsleitung (27) durch die erste Befestigungsöffnung (66) die Stromversorgungsleitung (27) durch die Kabeldurchführungsöffnung (34) geführt wird.

12. Verfahren nach einem der Ansprüche 10 oder 11, wobei das Elektronikmodul (10) ein Elektronikmodul (10) nach einem der Ansprüche 6 bis 9 ist, **dadurch gekennzeichnet, dass** nach dem elektrisch leitenden Verbinden der Stromversorgungsleitung (27) mit dem elektrischen Installationsgerät (60) oder mit der Elektroinstallation die Gehäusebefestigungsöffnung (36) angrenzend an die erste Befestigungsöffnung (66), an eine weitere Befestigungsöffnung (68, 70, 72) des Trägers (60) und/oder an eine Befestigungsöffnung (92) der Installationsdose (90) angeordnet wird und zur Befestigung des unteren Gehäuseteils (22) und/oder des Elektronikmodul s (10) auf dem Installationsgerät (60) und/oder an der Installationsdose eine Schraube (80) durch die Gehäusebefestigungsöffnung (36) und die erste Befestigungsöffnung (66), die weitere Befestigungsöffnung (68, 70, 72) und/oder der Befestigungsöffnung (92) der Installationsdose (90) geführt wird.

13. Verfahren nach Anspruch 12, wobei das Elektronikmodul (10) ein Elektronikmodul (10) nach einem der Ansprüche 7 bis 9 ist, **dadurch gekennzeichnet, dass** nach dem Durchführen der Schraube (80) durch die Gehäusebefestigungsöffnung (36) der Designrahmen (40) auf dem unteren Gehäuseteil (22) und/oder den oberen Gehäuseteil (24) aufgesetzt wird, um die erste Befestigungsöffnung (66) und/oder die weitere Befestigungsöffnung (68, 70, 72) und/oder die Kabeldurchführungsöffnung (34) und/oder die Stromversorgungsleitung (27) und/oder die Gehäusebefestigungsöffnung (36) und/oder die Befestigungsöffnung der Installationsdose (90) und/oder die Schraube (80) abzudecken.

14. Verfahren nach einem der Ansprüche 12 oder 13, wobei das Elektronikmodul (10) ein Elektronikmodul (10) nach Anspruch 9 ist, **dadurch gekennzeichnet, dass** vor dem Durchführen der Schraube (80) durch die Gehäusebefestigungsöffnung (36) das Elektronikmodul (10) mittels des wenigstens einen Haftmittels (21) an dem Träger (64) befestigt und/oder auf dem Träger (64) vorfixiert wird.
